# EUROPEAN PATENT APPLICATION

(11) **EP 2 181 799 A1**
(43) Date of publication of application: **05.05.2010**
(21) Application number: 09012091.6
(22) Date of filing: 23.09.2009
(51) Int. Cl.: B23Q 1/01, B27D 5/00, B24B 9/18, B29C 63/00

(54) **Automatic flanging center for panels having different peripheral profiles**

(30) Priority: 30.09.2008 IT PN20080070
(71) Applicant: Bortolini Engineering s.n.c., 31050 Miane (TV) (IT)
(72) Inventor: Bortolini, Francesco, 31050 Miane (TV) (IT)
(74) Representative: Dalla Rosa, Adriano

(57) **Abstract**

Automatic flanging centre for panels having different peripheral profiles and intended for use in a wide variety of applications, such as for instance in the manufacturing of furniture pieces, furniture components, and the like. The centre is provided with a vertical movable head (7) capable of alternately sliding in a horizontal direction along an elongated base (5), and provided with support and displacement means (15, 17) for said panels (23), which are adapted to support and displace said panels about a first and a second vertical axis extending orthogonally to the horizontal sliding axis of said movable head along said base (5), the displacement of the panels (23) relative to said first vertical axis being obtained through both an oscillating horizontal movement, in an alternate direction relative to said horizontal sliding axis of said movable head (5) transversally thereto, and a vertical alternating movement along the same vertical axis, and the displacement of said panels (23) relative to said second vertical axis being obtained through an alternating rotary movement. The support and displacement means (15, 17) are displaceable by the movable head (7) first into a panel loading station (31) for picking up the same panels and successively carrying them through a sequence of processing units (37, 32', 33, 34; 37, 35, 36), for the same panels to be flanged along the either mixed curved-straight or straight-only contoured edges thereof, and then into an unloading station (30) for the flanged panels to be finally discharged thereon.

## Description

The present invention refers to an automatic flanging centre for panels having differently contoured peripheral edges, adapted to fixedly apply a plurality of covering decorative strips with the desired aesthetical appearance onto the peripheral edges of panels having or not having variously shaped surfaces thereof, and vice-versa.

Known in the art there are flanging machines used to fixedly apply wooden covering strips onto the corresponding peripheral edges of flat panels made of wooden material, fibreboard, plastic material, or the like, wherein the panels to be flanged in this way along the edges thereof, as duly prepared and cut into the desired shapes and sizes in advance through corresponding processing steps carried out with the use of machine tools of a traditional kind, are placed on such flanging machines to be progressively covered along the peripheral edges thereof with corresponding covering strips of wooden, plastic or other suitable materials, in such a manner that these strips are eventually attached to said edges without any possibility for them to come off such edges. For this to be done, such covering strips are attached onto said peripheral edges of the panels with the use of suitable adhesive substances, such as for instance hot-melt glues or the like, and this bonding operation is usually carried out in a particular processing station of the machine by taking off, by means of a roller, the adhesive contained in a proper reservoir and transferring such adhesive onto the surface of the peripheral edges of each panel, by bringing said roller in contact with the desired surface and moving it thereagainst, wherein the covering strips are then pressed, by means of a further pressure roller of the machine, against the peripheral edges of each panel that have in this way been coated with adhesive, thereby bringing about a firm, undetachable bonding of such parts with each other. Known in the art there are further flanging machines for planar panels, which substantially comprise a sequence of separate stations for gluing and pressure-applying the decorative covering strips or borders against the peripheral edges of each panel, and further comprise subsequent separate stations for trimming and butting said peripheral edges.

In the above-mentioned prior-art machines, the panels being flanged are conveyed, i.e. displaced in succession by means of continuous conveying chains of a traditional kind (e.g. belt-driven roller conveyors, belt tracks) towards all above-cited stations, and are flanged on one or more peripheral edges with a straight-only configuration. However, flanging machines of the above-noted kind have clear application limitations, which mainly derive from the fact that they are structured and arranged so as to be able to solely handle and process panels having straight edges, so that they cannot perform any such processing on panels having curvilinear peripheral edges.

The object of the present invention is to overcome the drawbacks and application-related limitations of prior-art panel flanging machines of the above-noted kind by providing and making use of an automatic flanging centre capable of handling and processing panels having differently contoured peripheral edges, i.e. peripheral edges that are not only straight and rectilinear, but also curvilinear with a concave and/or convex contour, such inventive automatic panel flanging centre further featuring a simple, compact construction structure, adapted to ensure that these panels can be flanged to a high degree of productivity, versatility and flexibility thereof.

According to the present invention, this aim is reached in an automatic panel flanging centre incorporating the construction-related characteristics as substantially recited in the appended claims and illustrated in the following description with reference thereto.

These and further features and advantages of the present invention will anyway be readily understood from the description that is given below by way of non-limiting example with reference to the accompanying drawings, in which:
- Figure 1 is a perspective rear view of the automatic panel flanging centre according to the present invention, as arranged for flanging panels having peripheral edges with both mixed curved and straight and straight-only contours in a continuous operating manner, without any intermediate stop or interruption between an operation and the following one;
- Figure 2 is a perspective front view of the panel flanging centre as arranged for flanging panels having peripheral edges with a mixed curved and straight contour;
- Figure 3 is a front view of a portion of the panel flanging centre shown in Figures 1 and 2;
- Figure 4 is a side view of the panel flanging centre shown in Figure 3;
- Figure 5 is a plan view of the panel flanging centre shown in Figure 1, in the condition in which the movable head is displaced jointly with the panel into positions in which the sole straight side edges of the same panels are flanged;
- Figure 6 is a plan view of the panel flanging centre, in the condition in which it is operatively combined with a panel loading and unloading system for loading and unloading panels relative to a pantograph or a stacking-type magazine;
- Figure 7 is a schematic front plan view of the different component parts of the inventive panel flanging centre, as provided to supply the covering strips and apply them against the peripheral edges of the panels;
- Figure 8 is a schematic side view of the edge trimming unit of the component parts shown in Figure 7;
- Figure 9 is a schematic side view of the edge scraping unit of the component parts shown in Figure 7;
- Figure 10 is a schematic plan view of the edge butting-rounding off unit of the component parts shown in Figure 7;
- Figure 11 is a schematic side view of the edge butting-rounding off unit illustrated in Figure 10;
- Figure 12 is a schematic plan, detail view of the edge butting-rounding off unit illustrated in Figure 10, as used to process variously shaped and contoured panels;
- Figure 13 is a schematic plan view of the edge butting unit of the component parts shown in Figure 7, as arranged for flanging panels having straight edges only;
- Figure 14 is a same view as the one shown in Figure 13 of the edge butting unit during the operation thereof.

Illustrated in the above-listed Figures is an automatic panel flanging centre according to the present invention for flanging panels having different peripheral contours, as adapted to fixedly attach a plurality of decorative covering strips made of wooden, plastic or other suitable material, and having the desired aesthetical appearance, against the peripheral edges of panels made of wood, plastic material, fibreboard, chipboard, or the like, and having straight, curved or mixed curved and straight peripheral edges, in particular with a concave and/or convex contour.

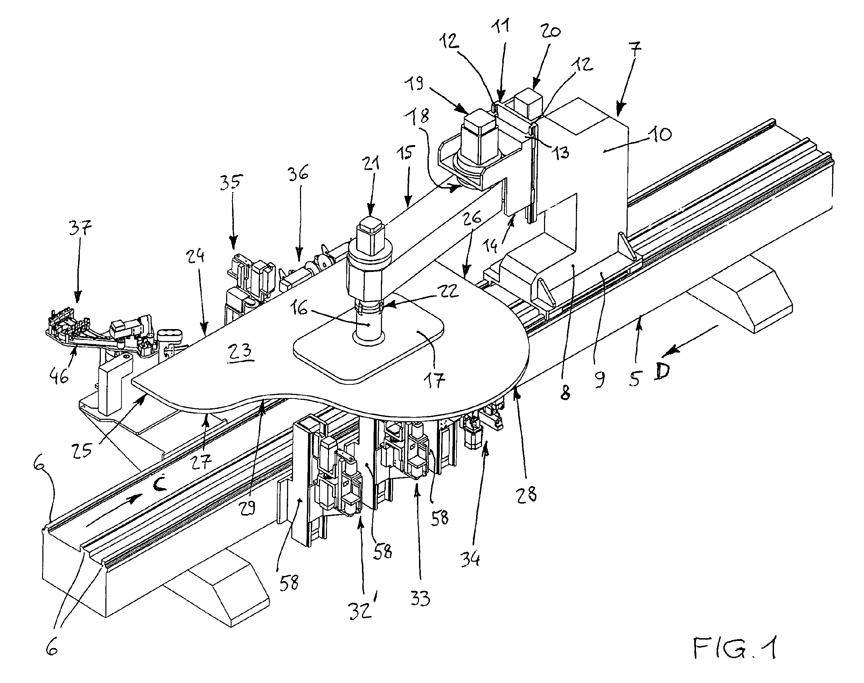

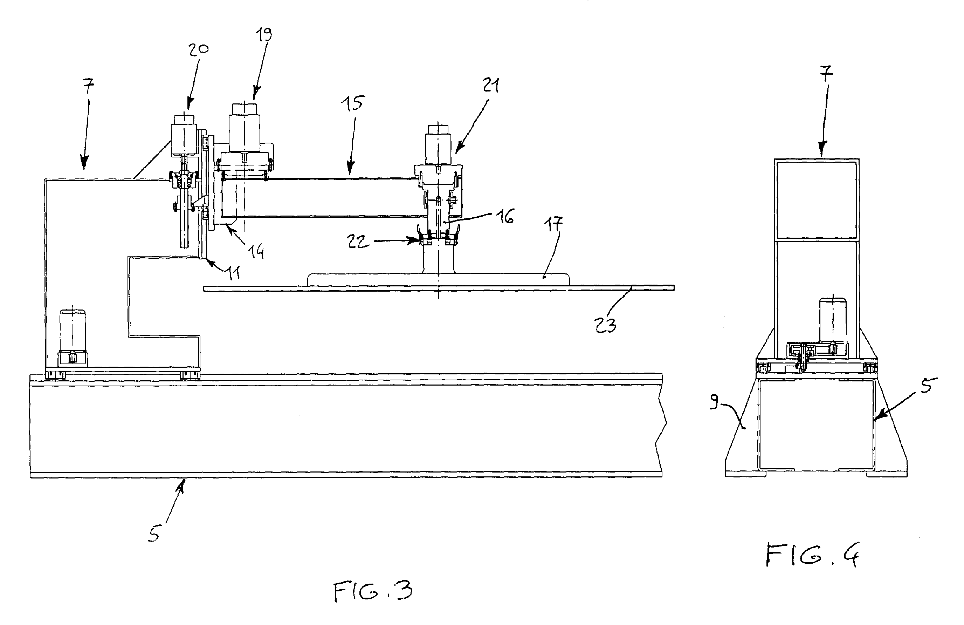

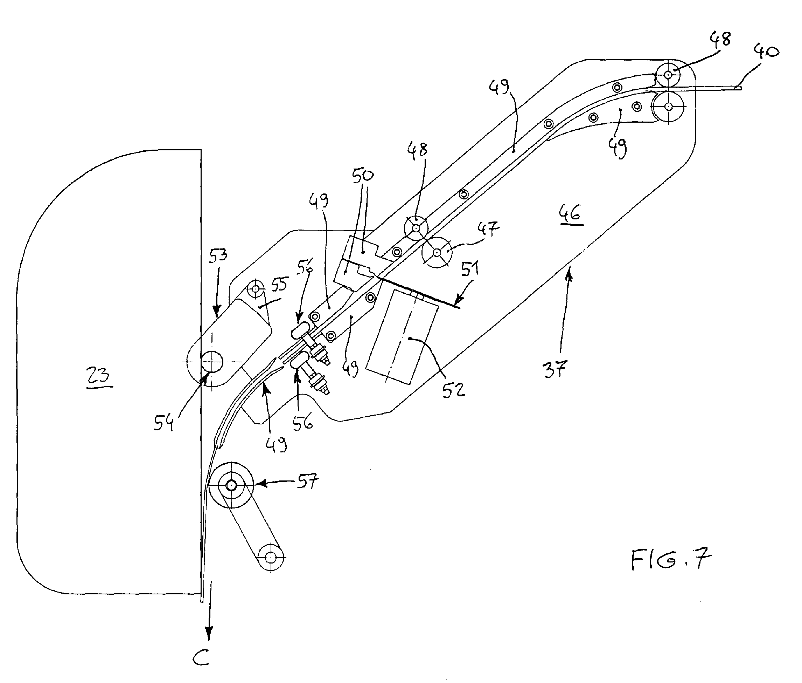

In particular, illustrated in Figures 1 to 6 there is an automatic panel flanging centre made and provided as described above, whereas Figures 7 to 14 illustrate the various component parts mounted on and included in the inventive automatic panel flanging centre.

With particular reference to Figures 1 to 4 for a start, the inventive automatic panel flanging centre is substantially comprised of a planar base 5 having a horizontal, rectilinear extension, in which there are provided horizontal, rectilinear a protruding guide runners 6 arranged parallel to and spaced from each other in the width direction of said base and extending all over the length of the same base, so as to allow a vertical movable head 7 to alternately slide in a rectilinear direction, as driven in the two alternating sliding directions by driving means of a kind as generally known as such in the art (not shown), said movable head being comprised of a lower head portion 8 secured at the bottom with a planar plate 9 resting upon the top planar surface of the base and shaped so as to be able to slide along the guide runners 6, and an upper head portion 10 integrally formed with said lower head portion 8 and bent orthogonally relative to the latter, and spaced by a given height from the top planar surface of the same base. At the planar vertical end portion of the upper head portion 10 there is secured a vertical planar plate 11 that is formed to include vertical rectilinear guide runners 12, in which there are able to engagingly fit corresponding protruding ribs 13 of a vertical movable saddle 14, in which there is hinged an end portion of a horizontal rectilinear arm 15, in the other end portion of which there is connected in an articulated manner a rotating vertical stud 16 carrying at the lower end portion thereof a horizontal planar plate 17 provided at the bottom thereof with suction cups (not visible in the Figures) connected to and included in an appropriate pneumatic actuation circuit of the panel flanging centre, which is adapted to create or remove, as the case may be, a vacuum in said suction cups in view of picking up the panels to be flanged, to convey the panels through the flanging process steps, and to release the panels at the end of the flanging process, in the manners and with the operative steps that shall be described below.

The rectilinear arm 15 is capable of oscillating in a horizontal plane with a maximum pre-established angle of rotation about the hinging point 18 thereof, thereby determining a corresponding displacement in the same direction of the plate with suction cups 17 and, as a result, also of the panel being each time picked up by the same plate, and can further be raised from and lowered onto the top planar surface of the base 5 by an extent equal to the vertical sliding movement of the movable saddle 14 relative to the vertical planar plate 11, resulting in a corresponding displacement in the same direction of also the plate with suction cups 17 and the panel being each time picked up by the latter.

The rectilinear arm 15 is rotatably driven by a gearmotor assembly 19, which is secured to and carried by the movable head 7, as duly connected to the electric circuit of the panel flanging centre and controlled by a control unit of the latter (not shown), and said rectilinear arm 15 is further driven to raise and lower in a vertical direction by another gearmotor assembly 20, which is again controlled by said control unit of the centre and secured to and carried by the movable head 7, as well as joined by means of a vertical threaded screw (not shown) engaging a corresponding nut screw (not shown, either) attached to the movable saddle 14 of the same arm on the rear side thereof. Finally, at the free end portion of the arm 15 there is mounted a further gearmotor assembly 21 adapted to rotatably drive the plate with suction cups 17, as again connected to the electric circuit of the panel flanging centre and controlled by the same control unit of the latter. Such plate with suction cups 17 may also be replaced with further plates of the same type, but having different sizes and operative performance capabilities, for use in connection with panels having differing sizes and/or contours, by means of a quick-fit and quick-release mounting device 22 provided at the lower end portion of the rotating stud 16 connected to the gearmotor assembly 21 and rotatably driven by the latter, said quick-release mounting device 22 being able to be fitted into and released from a corresponding dog clutch (not shown) provided in the related plate with suction cups 17. In addition, such plate may be also replaced with other pick-up means, such as for instance adjustable-type telescopic assemblies provided with suction cups (not shown), without departing from the scope of the present invention.

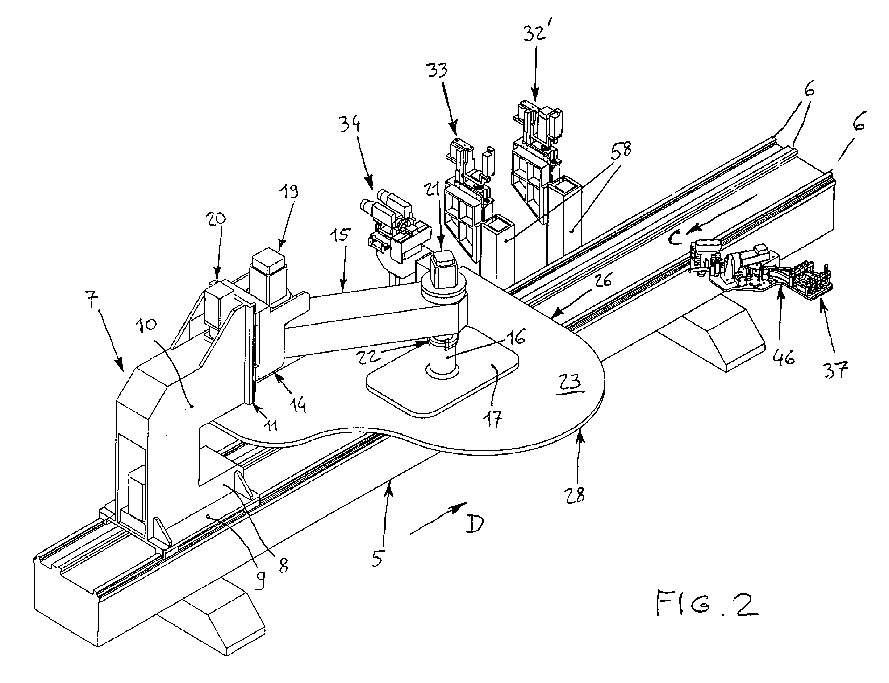

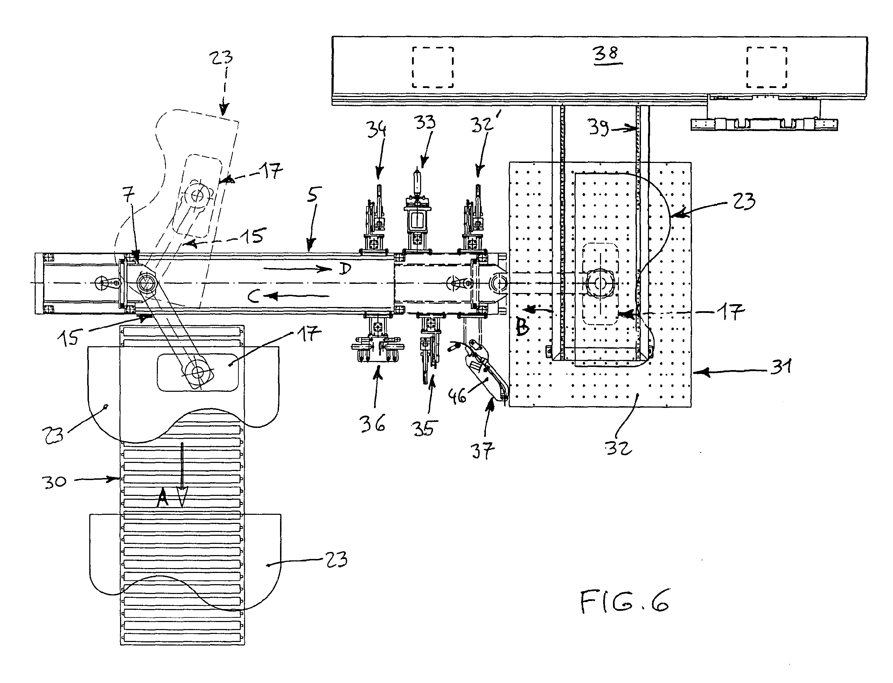

More specifically, illustrated in Figures 1 to 3 there is the automatic panel flanging centre, the movable head 7 of which is displaced into a given position along the base 5, whereas the rectilinear arm 15 is rotated, relative to the same base, jointly with a panel 23, which has been picked up and raised by the plate with suction cups 17, and which is contoured to feature straight sides 24, 25, 26 and convex curved sides 27 and 28, as well as a concave curved side 29, all of them joining up with said straight sides. Illustrated in Figure 1 there is the automatic panel flanging centre made to include the various flanging component parts as they will be described in greater detail below, and arranged for flanging panels having edges showing a mixed curved and straight contour, or solely straight edges, as the case may be, through the various processing steps that shall be described below, whereas the automatic panel flanging centre shown in Figure 2 is made to include the various flanging component parts as they will again be described in greater detail below, and is arranged for flanging panels having edges showing a mixed curved and straight contour through the various processing steps that shall again be described below. From the illustration in Figure 6 there can in addition be seen that, at a point corresponding to the position of the movable head 7 shown in Figures 1 and 2, there is provided a belt-type or roller-type conveyor 30 of the motor-driven kind, which is arranged to extend orthogonally relative to the direction of extension of the same base, such conveyor being provided to solely take care of unloading the flanged panels, which is done in the direction indicated at A, whereas each panel 23 to be flanged is loaded at a manual loading station 31, which is duly provided with appropriate safety provisions for the operator working at it, and can be noticed to be situated in alignment with and slightly spaced from the end portion of the base 5. Regardless of the actual contour of the peripheral edges thereof, each panel due to be flanged on the automatic flanging centre is loaded thereonto by manually placing the panel 23 onto the related loading bench 32 of said loading station and displacing - again manually - the same panel in the direction indicated at B towards the related end portion of the base 5, where also the movable head 7 can be seen to be displaced in this particular step of the flanging process, so that, in this condition, as soon as the panel is displaced onto the free end portion of the base 5, such position is automatically detected by appropriate sensors (not shown), which therefore trip to actuate the plate with suction cups 17 for the latter to move from the raised resting position down to the lowered working position thereof, in which the suction cups are therefore able to come into contact with the panel surface. Thereupon, a vacuum is created in the same suction cups, so that they remain attached to the panel. In this condition, the movable head 7 is then caused to move forwards, jointly with the panel attached thereto, along the base 5 so as to progressively move in a succession through the various component parts and the related flanging process steps of the automatic flanging centre, such displacement of the head-panel assembly through the panel flanging centre occurring with a single movement of the same assembly in the direction indicated at C, in the case that flanging is done on panels having solely straight-contoured edges by means of the related component parts provided on one side of the same base, or with a sequence of alternating movements - first in the direction indicated at C and then in the opposite direction indicated at D - in the case that flanging is done on panels having edges with a mixed curved- straight contour, or even solely straight-contoured edges, by means of the related component parts provided on the other side of the base 5.

During these process steps, the panel is caused to rotate by the plate with suction cups 17 so as to have the edges of the same panel constantly located in the correct position relative to said flanging component parts of the centre, thereby ensuring an efficient handling and processing of the covering strips as they are applied against the panel edges all along the entire peripheral contour of the same panel. At the end of this sequence of processing steps, the movable head 7 - jointly with the flanged panel carried by it - will have reached the end-of-movement position shown in Figure 6, in which the flanged panel is moved away from the above-mentioned operating parts of the flanging centre to such an adequate extent as to safely and freely allow it to be rotated and properly arranged for unloading. Thereupon, the plate with suction cups 17 is slightly raised, jointly with the panel, and the movable head 7 is held in this position, in which the flanged panel is raised, moved above the conveyor 30, lowered and placed onto such conveyor by the plate with suction cups 17 in a sequence, wherein such conveyor will then provide for the same panel to be automatically moved towards the unloading section of the same conveyor, so that it can be then picked up for packaging and storing. At the same time, the above-mentioned plate with suction cups 17 is brought again above the base 5 in a condition in which it is slightly raised relative thereto, and, with a movement in the direction indicated at D, it is brought back to its position at the manual loading station 31, thereby becoming ready to pick up a new panel to be flanged and carry it through the various steps of the flanging process.

It can therefore be readily appreciated that flanging the straight/rectilinear edges of the panels through the related steps of the flanging process as described above is performed automatically, quickly and in a continuous operating mode in a single movement of the panel through the flanging centre, thanks to the provision of said movable head 7 and said plate with suction cups 17, which in fact take care of displacing the panel through all component parts needed to have such panel completely flanged, as well as thanks to the fact that the panel is caused to rotate so as to have it each time oriented in a position allowing the covering strips to be in all cases applied correctly against the straight peripheral edges of the panel, while being caused to undergo - in a continuous sequence - the various process steps provided subsequently, for each and any shape whatsoever of the edges of the panel being handled.

Anyway, the automatic panel flanging centre of this invention does not only enable panels with solely straight peripheral edges to be flanged, since it also allows for panels having variously shaped/contoured, curved or mixed straight-curved peripheral edges to be flanged, in a way that was practically impossible to implement in or carry out with flanging machines of the traditional kind. In the inventive flanging centre, the processing steps required to complete flanging of all such panels having such variously shaped and contoured peripheral edges are performed smoothly and quickly, in quite short a cycle time. This particularly applies to panels with straight/rectilinear edges, which are processed in an uninterrupted sequence through the various steps, i.e. without any interruption between a step and the following one, thereby implying a lesser extent of panel handling and, therefore, a far greater productivity and flexibility.

In the above-cited Figures there can also be seen the various component parts used to carry out a panel flanging operation. These component parts are provided and arranged along the elongated base 5, on both sides thereof, in intermediate positions between those in which the movable head 7 is capable of sliding for displacement, as duly selected and provided for the covering strips, which have already been applied onto the peripheral edges of the related panels in the manner that shall be described further on, to be able to undergo a sequence of specific processing steps. In particular, the above-mentioned component parts are comprised of a first set and a second set of component parts, wherein the component parts in the first set include processing units provided to handle panels having peripheral edges with a mixed curved/straight contour, or just a straight contour (see Figure 1), and substantially comprise a trimming unit 32', a scraping unit 33 and an edge butting and rounding-off unit 34, which are slightly spaced from and aligned with each other along the forward-moving path C of the panel to be flanged, and which shall be described in greater detail further on. In particular, the trimming unit is provided to properly trim, or pare off, the edges of the covering strips to be applied to the panel, the scraping unit is provided to perform a final surface scraping action all along the periphery of the edges of such strips, in order to smooth and shave them off and allow them to be given a satisfactory aesthetical appearance. The edge butting and rounding off unit is in turn provided to appropriately cut and round off the corners at the end edges of such strips. In turn, the second set of component parts is comprised of the component parts including units provided to handle panels having solely straight-contoured edges (see again Figure 1), substantially including a trimming unit 35 and a butting unit 36. In addition, situated on this side of the flanging centre there is also a separate unit 37 for loading and feeding the covering strips, as well as for cutting and gluing, i.e. bonding the same strips against the both straight-contoured and mixed curved/straight-contoured edges of the panels having both a straight and a curved peripheral contour or even a mixed curved/straight peripheral contour, wherein all these units and the processing steps, such as gluing, performed by them shall be described in greater detail further on.

Illustrated in Figure 2 there is a panel flanging centre as arranged for flanging panels having peripheral edges with a mixed curved and straight contour, and not straight-only edges, which in this case is only comprised of a trimming unit 32', a scraping unit 33 and an edge butting and rounding off unit 34, which are provided and arranged on a single side of the base 5, and are adapted to perform the same operations as described above on such panels having mixed-contour peripheral edges, whereas on the other side of the base 5 there is only provided and arranged a separate unit 37 similar to and situated in the same position as the afore-described one.

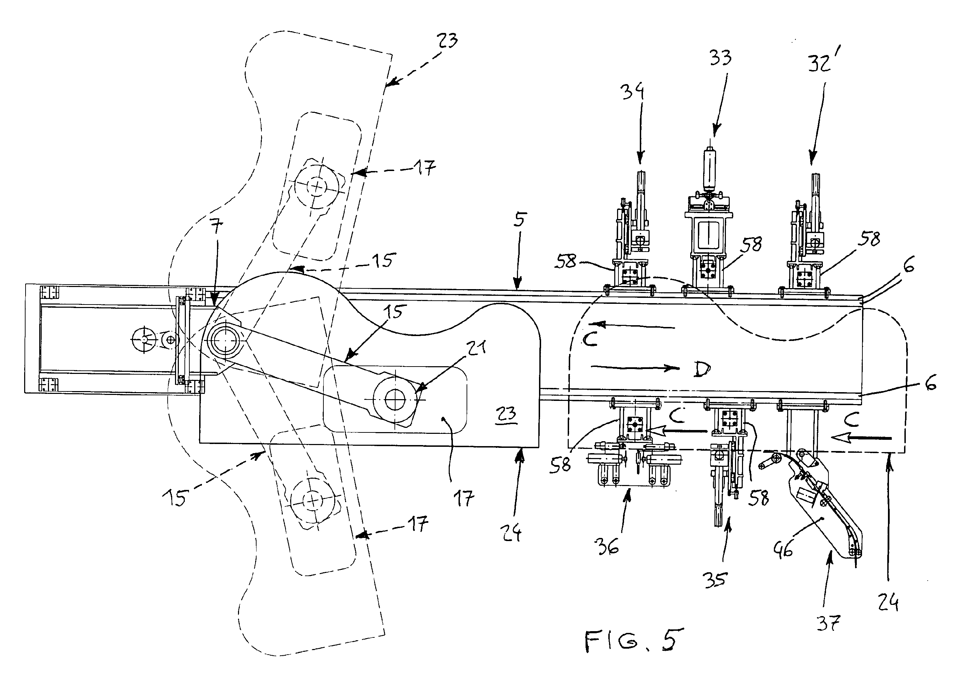

In Figure 5 there is shown a panel 23 having straight peripheral edges, which is displaced into two different positions along the base 5 of the flanging centre shown in Figure 1, i.e. in a first position (indicated with dashed lines on the righthand side), in which the straight edge 24 of the panel moves in a continuous, uninterrupted sequence through the afore-mentioned processing units 37, 35 and 36 for flanging, trimming and butting said straight edges, with the possibility for other processing steps or operations to be integrated therein as needed or required, actually, without departing from the scope of the present invention, and in a second position (indicated with continuous lines on the left-hand side), in which the flanging and the subsequent finishing steps of the straight edge of the panel are completed, wherein the panel, in this end position of the forward-movement thereof, has moved beyond all processing units.

Referring now to Figure 6, this can be seen to show a flanging centre coupled, i.e. combined with a processing centre for processing the panels to be flanged by means of a pantograph 38. In this case, then, the loading station for the panels to be flanged is again situated in the same position 31 as noted afore, i.e. next to the working table of the pantograph, and such loading station forms an integral part of the pantographing centre 38-39, in which the panels are loaded and processed into the desired contours. Thereupon, the thus contoured panels are picked up by the plate with suction cups 17 and caused to undergo the required flanging steps. Also in this case, therefore, all component parts of the panel flanging centre are similar to the formerly described ones; the same applies to the various flanging steps being carried out on the panels, which are in fact performed in the same way as described afore. It must furthermore be noticed that the component parts being required to complete a panel flanging process, i.e. for flanging the panels, may be even provided on just a single side of the base 5, rather than on both sides thereof as described up to now, and into different arrangements, wherein all these component parts would in this case be aligned with each other along this single side, without this implying any departure from the scope of the present invention.

With reference to the remaining Figures 7 to 14, the various component parts used to panel flanging purposes in the panel flanging centre according to the present invention shall now be described.

In particular, shown and illustrated in Figure 7 there is the separate unit 37 described above, which is provided for loading and feeding the covering strips 40, as well as for cutting and gluing them against the edge of each panel with a straight contour, a curved contour or a mixed curved/straight contour, which is shown as it is moving forwards in the direction C along the base of the flanging centre in the Figure being considered. This separate unit is in turn comprised of a sequence of component parts, as will be described further on, which are mounted on a properly contoured plate 46 adapted to be removably brought into coupling with the base 5 of the flanging centre. These component parts substantially include a loading device for loading, i.e. feeding in, one or more strips 40, as duly wound round respective separate spools (not shown), said device being substantially comprised of a number of motor-driven feed-forward and guide rollers 47 and idle rollers 49, as well as guides 49 provided in an alignment with said rollers, thereby forming a sliding path for said strips, the free end of which is introduced through the rollers, which then cause the same strips to move forwards all along said sliding path thereof until they reach in this way up to a cutting device comprised of clamping pads 50 and a rotary cutting blade 51 driven by a related electric driving motor 52, in which the strips are in the first place temporarily stopped to the respectively desired length by the clamping pads 50, which are automatically pressed against the same strips to such purpose, and are then completely cut in the transverse direction by the rotary cutting blade 51, which is driven in a sequence from a resting position, in which it is shifted away from each strip so as to allow the same to slide and move forwards to the desired cutting length, to a working position, in which it moves close to the same strip so as to be able to cut it. Thereupon, the clamping pads 50 and the cutting blade 51 are automatically released and moved away from the thus cut strip, and brought back into the starting positions thereof, so that the thus cut strip is again caused to move further towards the following gluing device included in the component parts of the unit 37, thereby allowing for a next strip 40 to be fed in through the clamping pads 50 and be cut by the cutting blade 51.

Such gluing device is comprised of at least one glue reservoir 53 of a traditional kind, which is associated to spreading rollers 54 for the latter to be able to subtract the glue from said reservoir 53 and apply it against the edges of the panel to be flanged, wherein all these parts are supported by a small plate 55 elastically fulcrated on the plate 46, and is further comprised of one or more heating lamps 56 for tempering the edge, in the case that the thickness of the edge and the material of the edge are such as to make it necessary or appropriate for such treatment to be carried out, as well as one or more pressure rollers 57 adapted to apply and press each strip 40 against the glue-coated edges of the panel.

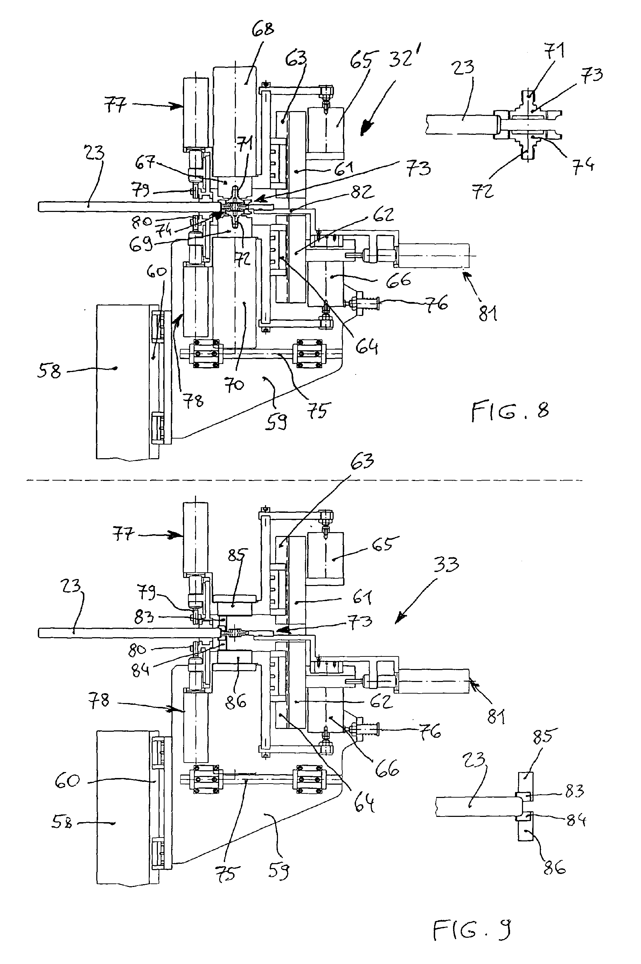

Shown in Figure 8 there is a trimming unit 32' for panels having edges with a mixed curved/straight contour, or just a straight contour, wherein such trimming unit is supported by an upright section-beam 58 secured to one side of the base 5, and is comprised of a support block 59, that is able to slide with an alternating vertical movement along corresponding vertical guide runners 60 of said upright section-beam 58, and is in turn provided with mutually aligned vertical guide runners 61 and 62 for an elastically supported upper saddle 63 and an elastically supported lower saddle 64, respectively, to be able to slide with an alternating movement along a limited length in the vertical direction, each such saddle being driven by a corresponding pneumatic actuating cylinder 65 and 66 secured to the respective saddle and supported by the respective vertical guide runner, said unit being further comprised of an upper milling device and a lower milling device, of which the first milling device is formed of an upper block 67 with an electric motor 68 provided thereabove, both of them secured to the upper saddle 63, and the second milling device is formed of a lower block 69 with an electric motor 70 provided thereabelow, both of them secured to the lower saddle 64, such blocks being arranged symmetrically relative to each other, in an arrangement in which they are facing each other, and accommodating a respective vertical shaft 71 and 72 of a corresponding profiling mill 73 and 74, each one of which is adapted to be rotatably driven by the respective electric motor 68 and 70 and is given such profile as to be able to cut the upper side, the lower side and part of the front side, respectively, of the strip applied on to the panel, so as to obtain corresponding edges smoothly joining each other, pared off, i.e. bevelled and inclined both on top and at the bottom, with mutually symmetrical inclinations, as this can best be seen in the enlarged detail on the right side of the Figure. During trimming, the assembly formed of the vertical guide runners 61 and 62, the saddles 63 and 64, the cylinders 65 and 66 and the upper and lower milling groups is furthermore able to slide in an alternating manner in the horizontal direction along related horizontal guide runners 75 provided in the support block 59, owing to the action of a spring 76 that is in turn supported by the support block 60 to act against said assembly. On a side of the upper and lower electric motors 68 and 70 there is mounted a respective system 77 and 78 for either manually or automatically adjusting the distance of the respective profiling mill 73 and 74 from the opposite planar horizontal side of the edge of the panel, these adjustment systems being of a traditional kind and provided with respective feeler or probe members 79 and 80 adapted to slide in an alternating manner in the vertical direction and acting against the upper and the lower sides of the panel to thereby control the cylinders 65 and 66 into displacing the related profiling mills - prior to trimming - into the correct trimming positions relative to the panel.

Similarly, in the support block 59 there is additionally mounted a further adjustment system 81 for either manually or automatically adjusting the distance of the respective profiling mill 73 and 74 from the opposite planar vertical side of the edge of the panel, wherein also this adjustment system is of a traditional kind and provided with a feeler or probe member 82 adapted to slide in an alternating manner in the horizontal direction and acting against such planar vertical side to thereby keep, owing to the action of the spring 76, and prior to trimming, the profiling mills in the correct trimming positions relative to the panel.

In this manner, the support block 59 can be driven and actuated automatically, by means of a related electric motor (not shown), along the upright beam 58 from a lower end position, in which the trimming unit 32' is displaced into a lowered non-operational position, when no processing with the same trimming unit is required or is to be carried out, to an upper end or limit position, in which the trimming unit is displaced into the raised operating position thereof, when such processing with the same trimming unit is on the contrary required.

In particular, the above-described steps of the flanging process are carried out on each panel featuring edges with a mixed curved and straight contour by this processing unit by handling such panel with a sequence of both alternating displacements of the movable head 7 along the elongated base 5, in either of the above-mentioned mutually opposite moving directions C and D, and rotations of the rectilinear arm 15 into various positions, so as to each time correctly expose each edge of the panel to the action of the milling cutters 73 and 74 in view of having all such edges duly trimmed and finished over the whole length thereof. Further to handling such panels featuring edges with a mixed curved and straight contour in the above-described manner, the possibility is also given for panels having solely straight edges to be trimmed, as well, by in this case having each such panel handled with just a single displacement in the sole longitudinal direction C, while causing the rectilinear arm 15 to rotate into a single position, so as to correctly expose such straight edges to the action of the milling cutters 73 and 74 in view of having them duly trimmed and finished over the whole length thereof. Similarly, processing each panel featuring just straight edges on the flanging centre shown in Figure 1 is done by the trimming unit 35 by again handling, i.e. displacing such panel solely in the longitudinal direction C along the base 5 and causing again the rectilinear arm 15 to rotate into a single position, so as to also in this case correctly expose such straight edges to the action of the milling cutters 73 and 74 in view of having them duly trimmed and finished over the whole length thereof.

With such arrangement and such processing modes and capabilities, the automatic panel flanging centre according to the present invention is therefore capable of enabling the straight/rectilinear edges of panels, regardless of the latter having or not having variously contoured edges, in a continuous manner and without any interruption or stop between the various successive processing steps, in which the panel edges undergo trimming, butting and rounding off and general finishing, without any need for further interruptions in view of separate processing steps, as currently required in panel flanging centres currently on the market, for flanging panels with straight/rectilinear edges only and panels featuring curved edges or edges with a mixed curved-straight contour, and, in the case of panels with just straight edges, with a single displacement of the panel in the longitudinal direction C and a single rotary displacement of the rectilinear arm 15, under resulting reductions in both cycle time requirements and number of processing steps needed for a corresponding significant increase in productivity, all this being on the other hand obtained with a panel flanging centre that, apart from being very compact in the overall size and space requirements thereof, is very low in costs and, therefore, quite competitive as compared with panel flanging centres currently on the market.

Shown in Figure 9 there is a scraping unit 33 for panels having edges with a mixed curved/straight contour, or just a straight contour, wherein such scraping unit is substantially comprised of the same component parts as the trimming unit 32', so that the same reference numerals will be used to also indicate these parts, and further works in the same manner as said trimming unit, except for the fact that, in this case, the profiling cutters are replaced by scraping tools 83 and 84, respectively, of a traditional kind that are mounted on respective toolholders 85 and 86 supported by the respective saddles 63 and 64. Also in this case, therefore, scraping of the edges of the panels is done and performed with the same processing steps as described afore.

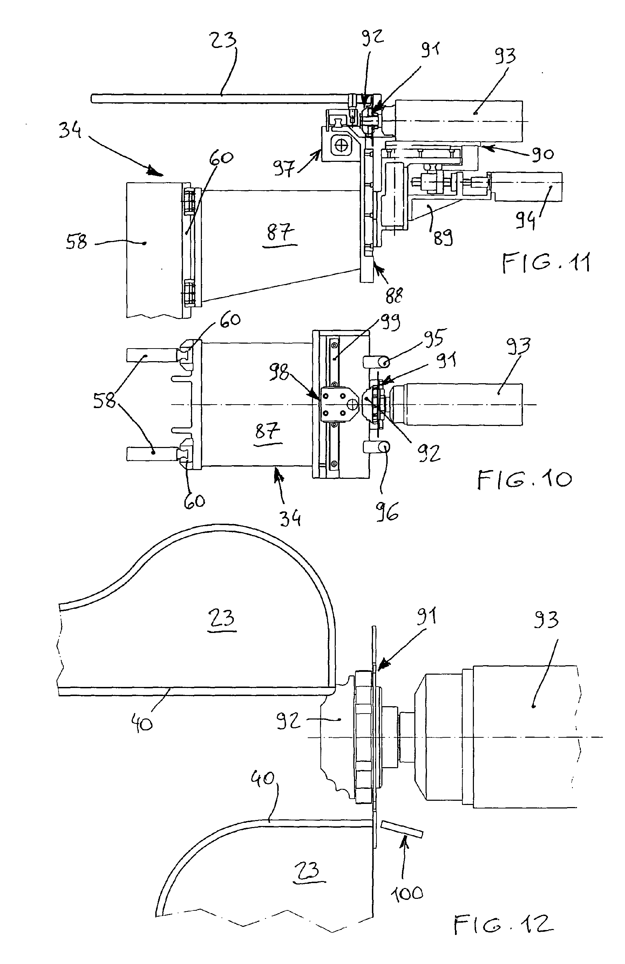

Illustrated with reference to Figures 10 and 11 there will be now the butting-rounding off unit 34 for panels having edges with a mixed curved/straight contour, or just a straight contour, wherein such butting-rounding off unit con be noticed to be supported by an upright beam 58 secured to the same side of the base 5, to which also the trimming unit 32' and the scraping unit 33 are secured; it is comprised of a support block 87 adapted to slide with a vertical alternating displacement along corresponding vertical guide runners 60 of said upright beam 58, wherein such support block is also provided with vertical guide runners 88 for a vertical saddle 89 to be able to vertically slide along a limited length with a vertical alternating displacement thereon, said saddle being in turn provided with horizontal guide runners 90 on which there is able to slide, again along a limited length with a horizontal alternating displacement, an assembly comprised of a rotary cutting blade 91, a step-like contoured rotary head 92 (see also Figure 12), and an electric motor 93 provided coaxially with the blade 91 and the head 92 to rotatably drive both said cutting blade 91 and said head 92, wherein said rotary cutting blade 91 is provided to cut off the ends of the strips applied against the edges of the panels, and the step-like contoured rotary head 92 is provided to round off, according to different radiusing patterns, the corners of the cut edges.

The movable saddle 89 is furthermore provided with an either manual or automatic adjustment system 94 for adjusting the distance of both the rotary cutting blade and the rotary step-like contoured head from the vertical planar side of the edge of the panel, wherein such adjustment system is of a traditional kind and is provided with two fixed probes 95 and 96 capable of alternatingly sliding in the horizontal direction and acting against the vertical planar side of the edge of the panel to thereby keep - prior to butting and rounding off - both the rotary cutting blade and the rotary step-like contoured head in the correct working positions thereof relative to the edges of the panel. The movable saddle 89 is also provided with a further either manual or automatic adjustment system 97 for adjusting the distance of the rotary cutting blade from the rotary step-like contoured head, wherein also this adjustment system is of a traditional kind and is provided with a movable probe 98 capable of alternatingly sliding in the horizontal direction along a guide runner 99 extending transversally thereto, which is secured to the same movable saddle and acts against the either upper or lower horizontal planar side of the edge of the panel to thereby keep - prior to butting and rounding off - both the rotary cutting blade and the rotary step-like contoured head in the correct working positions thereof relative to each other and the edges of the panel. Illustrated in Figure 12 are the cutting blade 91 and the step-like contoured head 92 in the operative state thereof, wherein it can be noticed that the cutting blade 91 is shown in the state in which it has just cut the exceeding portion 100 off the free end of the strip 40 applied against the peripheral edge of a panel 23, whereas the step-like contoured head 92 is brought against the edge of a flanged panel 23 in view of rounding off said edge over the full height of the panel. All processing steps carried out with the above-described butting and rounding-off unit 34 are performed in the same manner as described above in connection with the trimming unit 32' and the scraping unit 33.

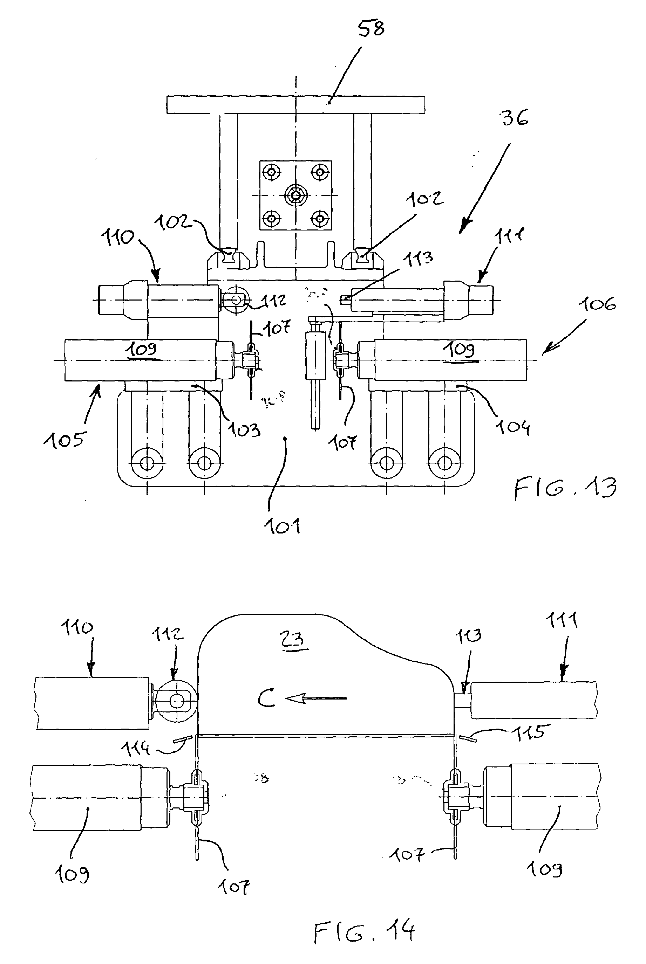

Shown in Figure 13 is the butting unit 36 provided to solely process straight panel edges, wherein such butting unit is again supported by an upright beam 58 secured to the same side of the base 5, which also the separate unit 37 and the trimming unit 35 are secured to, and is comprised of a support block 101 adapted to slide with a vertical alternating displacement along corresponding vertical guide runners 102 of said upright beam, wherein such support block is in turn provided with horizontal guide runners 103 and 104, as aligned with a spaced from each other, for corresponding butting devices 105 and 106 to be able to horizontally slide with an alternating displacement thereon, said butting devices being each provided with a rotary cutting blade 107 arranged coaxially with an electric drive motor 109, wherein said rotary cutting blade 107 is provided to cut off the exceeding ends of the strips applied against the edge of the panels and, in particular, the cutting blade on the left side is provided to cut off the leading end of the strips, while the cutting blade on the right side is provided to cut off the trailing end of the strips.

Each such butting unit is associated with a respective either manual or automatic adjustment system 110 and 111 for adjusting the cutting blade relative to the two mutually opposite vertical planar sides of the edge of the panel, wherein such adjustment systems are of a traditional kind and situated in an arrangement in which they are spaced from the respective unit. They are further provided with a respective probe 112 and 113 adapted to slide horizontally with an alternating displacement movement jointly with the respective butting unit. Such probes are in turn adapted to act against opposed vertical planar side of the edge of the panel to thereby keep - prior to butting - each cutting blade in the correct working positions thereof relative to the edges of the panel.

Illustrated in Figure 14 are the probes 112 and 113 in contact with the front straight edge and the rear straight edge, respectively, of a panel 23 that is being displaced in the forward-moving direction C, so as to constantly keep the blades - owing to the linkage existing between the adjustment systems 110 and 111 incorporating said probes and the respective cutting blades - correctly spaced relative to the same panel, in the condition in which each cutting blade 107 is able to exactly cut the respective protruding end portion of the strip applied against the edge of the panel, thereby producing a leading, i.e. front off-cut 114 and a trailing, i.e. rear off-cut 115, respectively.

## Claims

1. Automatic flanging centre for panels having different peripheral profiles, made of wood, plastic materials and the like and intended to be used for most different uses, such as for example for manufacturing furniture, furniture components and the like, adapted to apply irremovably a plurality of covering strips made of materials of different kind with the required aesthetical appearance against the peripheral edge of panels having either differently or not differently shaped surfaces, preferably by gluing with adhesives and adhesive substances of traditional type contained in at least one reservoir, said flanging centre comprising a carrying structure formed of a flat base with a horizontal rectilinear extent, provided with rectilinear guide members for the alternate sliding of a vertical movable head during flanging operation of the peripheral edges of said panels, and also comprising a plurality of treatment units, arranged laterally of said extended base, for loading the covering strips wound into related coils, and for gluing and applying them against said peripheral edges of each panel, as well as for trimming, scraping and butting the same edges, and said flanging centre finally comprising at least a loading station of the panels to be flanged and an unloading station of the flanged panels for discharging and packaging the same panels, **characterized in that** said vertical movable head (7) is provided with means (15, 17) for supporting and displacing said panels (23), adapted to support and displace such panels around a first and a second vertical axis, which are orthogonal to the horizontal axis of sliding the same movable head along said base (5), the sliding of said panels (23) being obtained with respect to said first vertical axis with both a horizontal oscillating movement in an alternate and transversal direction with respect to said horizontal axis of sliding said movable head (5), and an alternate vertical movement along the same vertical axis, and the sliding of said panels (23) with respect to said second vertical axis being obtained with an alternate rotation movement, said supporting and displacing means (15, 17) being displaceable by said movable head (7) at first in correspondence of said loading station (31), for drawing selectively the panels (23) to be flanged and displacing them in succession through said treatment units (37, 32', 33, 34; 37, 35, 36), in order to flange the same panels along their mixed curved- straight or straight-only peripheral edges, with a series of movements of the panels (23) effected with said movable head (7) and said supporting and displacing means (15, 17), and thereafter for arranging the flanged panels respectively on to said unloading station (30), said supporting and displacing means (15, 17) being finally displaceable by said movable head (7) again in correspondence of said loading station (31) for performing the flanging operation of the peripheral edges of a subsequent panel.

2. Flanging centre according to claim 1, **characterized in that** said supporting and displacing means comprise a horizontal rectilinear arm (15), pivoted at one end portion thereof, in correspondence of said vertical axis, on a vertical movable saddle (14) slidable in a vertical direction along corresponding vertical guide members (12) of a vertical flat plate (11) secured to the upper part of said movable head (7), and also comprise at least a horizontal flat plate (17) provided with lower suction cups, or the like, for drawing by means of vacuum the panels (23), which is supported by a rotating vertical stud (16) articulated at the other free end portion of said horizontal arm (15), in correspondence of said second vertical axis, first, second and third powered means (gearmotors 19, 20, 21) being provided for determining respectively the oscillating displacement of said horizontal arm (15), the vertical displacement of said movable saddle (14) together with said horizontal arm (15), and the rotation of said horizontal flat plate (17) together with the panel (23), which has been drawn from time to time, wherein said first and second powered means (19, 20) are secured to and supported by said movable head (7), and said third powered means (21) are assembled on to the free end portion of said horizontal arm (15).

3. Flanging centre according to claim 2, **characterized in that** said plate with suction cups (17) may be replaced by further plates of the same type having different sizes and operative performances, thanks to coupling means (22) assembled on to said rotating stud (16), said plate withy suction cups (17) being also replaceable with other vacuum-operated drawing systems, such as for example adjustable telescopic device units provided with suction cups.

4. Flanging centre according to claim 3, **characterized in that** said loading station (31) may be paired with at least a copying machine centre (38-90) of the panels to be flanged, in order to receive from this the machined panels with the required profiles.

5. Flanging centre according to claims 3 and 4, **characterized in that** said base (5) is provided at one side thereof with a set of treatment units of panels with mixed curved-straight or straight-only shaped peripheral edges, comprising a trimming device (32'), a scraper (33) and a butting and edge rounding-off device (34), which permit the panels to be flanged the panels to be flanged with mixed curved-straight shaped edges with different alternate movements of said movable head (7) along said base (5), at first in a direction (C) and then in the opposite direction (D), with displacements of said horizontal arm (15) with the panel (23), said base (5) being provided at its other side with the unit (37) for loading the covering strips (40) and gluing and applying them against the peripheral edges of the panels (23).

6. Flanging centre to claim 5, **characterized in that** said base (5) is provided at its other side with flanging units of panels with straight/rectilinear peripheral edges only, constituted by a trimming device (35) and a butting device (36), arranged downstream said loading, gluing and applying unit (37) of the strips (40), with the possibility to apply any further per se known unit, in order to provide for the flanging and subsequent finishing operations of the straight/rectilinear-only edges of the panels (23) with a single movement, in a sequential manner without intermediate stops between a position and a subsequent one, in the same direction (C) of sliding of sad movable head (7), after that said horizontal arm (15) has been positioned by rotating together with the panel (23), thereby submitting said straight/rectilinear-only edges to the subsequent trimming, butting and any other possible operation in a continuous sequential manner, without any intermediate stop.

7. Flanging centre according to any of the preceding claims, **characterized in that** said treatment units (32', 33, 34, 37, 35, 36) may be also arranged with different arrangements on a single side of said base (5).
